# EUROPEAN PATENT SPECIFICATION

(11) **EP 0 693 854 B1**
(45) Date of publication and mention of the grant of the patent: **01.03.2000**
(21) Application number: 95110651.7
(22) Date of filing: 08.07.1995
(51) Int. Cl.: H04N 5/445, H04N 7/088

(54) **System for controlling updates of extended data services (EDS) data**
System zum aktualisieren der Daten eines ausgebreiteten Datendiensts
Système de commande de la mise à jour des données du service de données étendues

(30) Priority: 18.07.1994 GB 9414446; 23.05.1995 US 450955
(43) Date of publication of application: 24.01.1996
(73) Proprietor: THOMSON CONSUMER ELECTRONICS, INC., Indianapolis, IN 46206 (US)
(72) Inventor: Duffield, David Jay, Indianapolis, IN (US); Edde, Gabriel Alfred, Indianapolis, IN (US); Landis, Michael David, Fishers, IN (US)
(74) Representative: Hartnack, Wolfgang, Dipl.-Ing.

(56) References cited:
- EP-A- 0 312 798
- WO-A-93/22876

## Description

The invention concerns television receivers having circuitry for decoding information, such as closed caption data and extended data services information, that is included in a television signal.

In addition to closed captioning information, television signals in the United States may also include Extended Data Services (EDS or XDS) information as described in WO-A-93/22876. EDS information will be available on line 21 of field 2 and includes data encoded in the same format as closed caption data. Thus, the video signal includes both a video information signal component and a data signal component comprising EDS and caption data. EDS and captioning share the bandwidth of line 21 field 2 in a time multiplexed manner. EDS offers a wide range of useful information such as: program title, network name, and current time of day.

The format of EDS data is specified in the EIA-608 standard for line 21 data services for NTSC television signals. EDS data is organized in packets of data bytes. Each packet conveys one piece of information, e.g., the current time of day. Each line 21 of field 2 provides two bytes of EDS data. Particular data byte values occurring in the first byte of any line 21 of field 2 indicate the start of a packet. Each "start" data byte also defines a "class" of information that is included in the packet. For example, a "current" class packet includes information pertaining to the current program that is being viewed. A "miscellaneous" class packet includes various types of information such as time of day information. As an example, a value of Olh in the first data byte in line 21 of field 2 indicates the start of a current class packet while a value of 07h indicates the start of a "miscellaneous" class packet.

Although EDS information is potentially useful, EDS data decoded in a receiver may provide incorrect or inappropriate information. EDS data, like closed captioning data, occurs at a data rate that permits recording EDS data on video tape via a conventional video cassette recorder (VCR). Thus, recording a television signal that includes EDS information will also record the EDS data, e.g., EDS time-of-day packets that provide the current time when the packet was recorded. When a tape is viewed at a later time, recorded EDS information can be detected and decoded by the receiver. If the receiver always uses received EdS information for control purposes, the receiver may respond in an undesirable manner to recorded EDS information. For example, if the receiver always uses time information in EDS time-of-day packets to set a clock in the receiver, the clock will be set incorrectly in response to the recorded EDS data because recorded time-of-day information is no longer current. A similar problem exists in regard to EDS packets containing program schedule information because recorded schedule information may be of no value (i.e., the scheduled times have passed).

The invention resides, in part, in recognizing the described problem and, in part, in providing a solution to the problem. In accordance with a feature of the invention, a system for processing a television signal including a video information component and including a data component comprises first means for processing the data component to produce first data representing first temporal information associated with the television signal; second means for generating second data representing second temporal information associated with the system , and for producing a modification of the second data in response to the first data; control means for processing the first and second data to determine a time difference between first and second times represented by the first and second temporal information, respectively; wherein if the time difference is in a first range the control means operates in response to an control signal for preventing the modification of the second data, and if the time difference is in a second range exclusive of the first range the control means operates independent of the control signal for preventing the modification of the second data. The system also includes means reponsive to activation by a user for generating the control signal.

In accordance with another aspect of the invention, the control signal generating means includes output means for providing a notification to the user indicating that the time difference is within the first range; and input means responsive to activation by the user during an interval when the notification is being provided to the user for preventing the modification of the second data.

In accordance with another aspect of the invention, the system further comprises a tuner for tuning the television signal from a plurality of television signals, each of which includes a video information component and a data component, and a memory for storing a plurality of codes associated with respective ones of the plurality of television signals. The control means responds to a particular one of the stored plurality of codes associated with the tuned television signal for preventing the modification of the second data if the particular one of the stored plurality of codes exhibits a predetermined value.

In accordance with another aspect of the invention, the first data produced from the data component of the television signal represents a plurality of types of data and the control means prevents modification of the second data associated with the system in response to a particular type of data included in the data component.

In accordance with another aspect of the invention, the stored plurality of codes includes a particular code corresponding to a respective one of the plurality of types of data, and the control means responds to the particular code for preventing the second data from being modified in response to the respective one of the plurality of types of data.

The invention may be better understood by referring to the enclosed drawing in which:
FIGURE 1 shows a block diagram of a portion of a television receiver constructed in accordance with principles of the invention; and
FIGURE 2 shows, in flow-chart form, a portion of a control program for the television receiver shown in FIGURE 1.
Figure 3 shows, in flow-chart form, an embodiment of a feature of the control program illustrated in Figure 2.
Figure 4 shows, in flow-chart form, an embodiment of a feature shown in Figure 3.

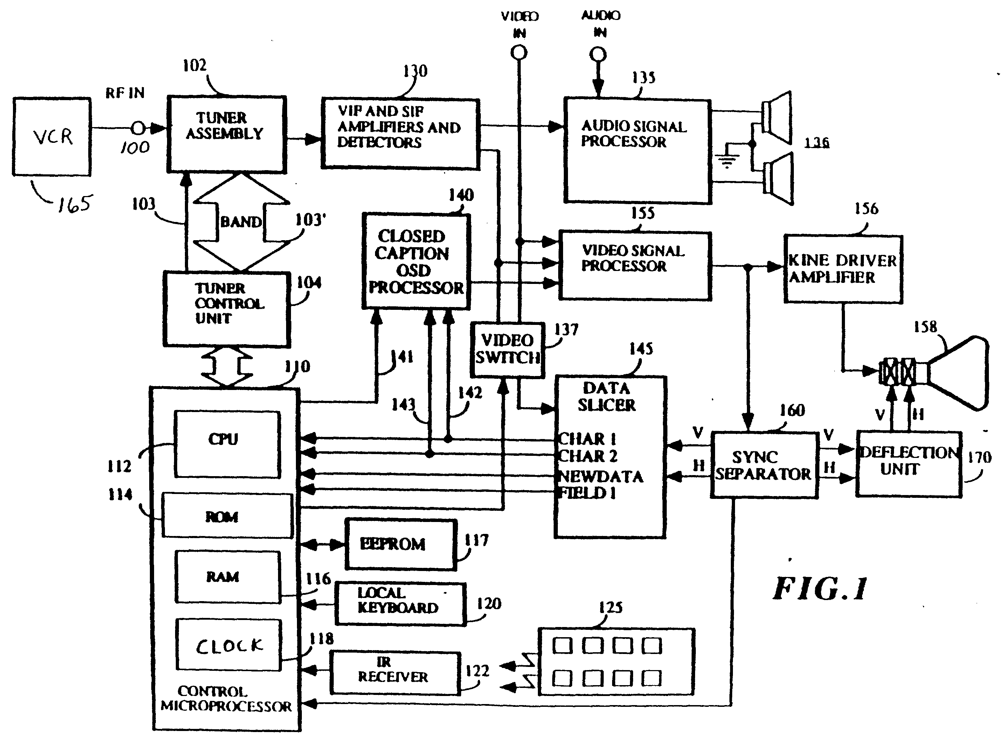

Referring to FIGURE 1, a television receiver includes an RF input terminal 100 that receives a radio frequency (RF) signal from VCR 165 and applies the signal to a tuner assembly 102. Tuner assembly 102 selects and amplifies a particular RF signal, i.e. the VCR signal for the arrangement in Figure 1, under control of a tuner controller 104 which provides a tuning voltage via a wire 103, and bandswitching signals via signal lines represented by the broad double-ended arrow 103', to tuner assembly 102.

Tuner assembly 102 converts the received RF signal to an intermediate frequency (IF) signal and provides an IF output signal to video (VIF) and sound (SIF) amplifier and detector unit 130. VIF/SIF amplifier and detector unit 130 amplifies the IF signal applied to its input terminal and detects the video and audio information contained therein. The detected video information is applied as one input of a video processor unit 155. The detected audio signal is applied to an audio processor 135 for processing and amplification before being applied to a speaker assembly 136.

Tuner controller 104 generates the tuning voltage and bandswitching signals in response to control signals applied from a system control microcomputer (µC) 110. The terms "microcomputer", "controller", and "microprocessor", as used herein, are equivalent. It is also recognized that the control function of microcomputer 110 may be performed by an integrated circuit especially manufactured for that specific purpose (i.e., a "custom chip"), and the term "controller", as used herein, is also intended to include such a device. Microcomputer 110 receives user-initiated commands from an infrared (IR) receiver 122 and from a "local" keyboard 120 mounted on the television receiver itself. IR receiver 122 receives IR transmissions from remote control transmitter 125. Microcomputer 110 includes a central processing unit (CPU) 112, a program memory (ROM) 114, and stores channel-related data in a random-access memory (RAM) 116. RAM 116 may be either internal to, or external to, microprocessor 110, and may be of either the volatile or non-volatile type. The term "RAM" is also intended to include electrically-erasable programmable read only memory (EEPROM) 117. One skilled in the art will recognize that if volatile memory is utilized, that it may be desirable to use a suitable form of standby power to preserve its contents when the receiver is turned off.

In response to user-entered control signals from local keyboard 120 and from infrared (IR) receiver 122, microcomputer (or controller) 110 generates a control signal causing tuner control unit 104 to control tuner 102 to select a particular RF signal. Tuner 102 produces a signal at an intermediate frequency (IF) and applies it to a processing unit 130 comprising a video IF (VIF) amplifying stage, an AFT circuit, a video detector, and a sound IF (SIF) amplifying stage. Processing unit 130 produces a first baseband composite video signal (TV), and a sound carrier signal. The sound carrier signal is applied to an audio signal processor unit 135 which includes an audio detector and may include a stereo decoder. Audio signal processor unit 135 produces a first baseband audio signal and applies it to a speaker unit 136. Second baseband composite video signals and second baseband audio signals may be applied to VIDEO IN and AUDIO IN terminals from an external source. For example, VCR 165 may be connected to the VIDEO IN and AUDIO IN terminals if VCR 165 supplies the appropriate baseband signals.

The first and second baseband video signals (TV) are coupled to a video processor unit 155 (having a selection circuit not shown). Electrically-erasable programmable read only memory (EEPROM) 117 is coupled to controller 110, and serves as a non-volatile storage element for storing autoprogramming channel data, and user-entered channel data.

The processed video signal at the output of video signal processor unit 155, is applied to kine driver amplifier 156 for amplification and then applied to the electron guns of a color picture tube assembly 158 for display. The processed video signal at the output of video signal processor unit 155, is also applied to a Sync Separator unit 160 for separation of horizontal and vertical drive signals which are in turn applied to a deflection unit 170. The output signals from deflection unit 170 are applied to deflection coils of picture tube assembly 158 for controlling the deflection of its electron beam. That portion of FIGURE 1 described thus far is known, for example, from the RCA CTC-140 color television manufactured by Thomson Consumer Electronics, Inc., Indianapolis, Indiana.

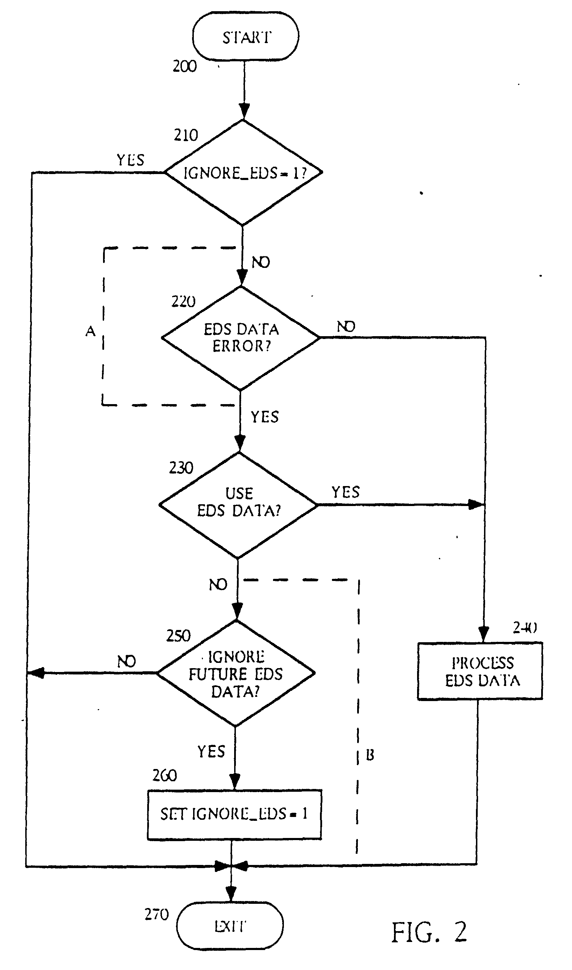

An embodiment of the invention will now be described with reference to the remainder of FIGURE 1, and to the flowchart in FIGURE 2. In Figure 1, DATA SLICER 145 operates as a decoder for extracting closed caption and EDS data from a data component of a video signal. The video signal processed by DATA SLICER 145 is either a video signal received at a first input from VIF/SIF amplifier and detector unit 130, or a video signal received at a second input from the VIDEO IN terminal. VIDEO SWITCH 137 selects which of the two video signals is coupled to DATA SLICER 145 under control of controller 110. The video signal received from VCR (video cassette recorder) 165 (either via RF IN terminal 100 as shown in Figure 1 or via VIDEO IN and AUDIO IN terminals) represents a video signal previously recorded on video tape that may include a data component including closed caption and extended data services (EDS) data.

An output of DATA SLICER 145 provides extracted closed-caption data to CLOSED CAPTION OSD PROCESSOR 140 via lines 142 and 143. DATA SLICER 145 also supplies closed-caption status data, such as a NEWDATA signal and a FIELD signal, to controller 110. The FIELD signal indicates whether the received data is in field 1 or field 2 of the video signal. Data that is included in the video signal in accordance with the standard for EDS data will be in line 21 of field 2. Under control of controller 110, via control line 141, CLOSED CAPTION OSD PROCESSOR 140 generates character signals, and applies them to an input of video signal processor 155, for inclusion in the processed video signal. CLOSED CAPTION OSD PROCESSOR 140 and DATA SLICER 145 may be included in controller 110.

The system in Figure 1 also includes a CLOCK feature 118 that is included in and controlled by controller 110. CLOCK 118 represents registers or memory locations where temporal information associated with the system, e.g., current time of day and/or date information, is stored. Controller 110 is responsive to an interrupt at periodic intervals, e.g., a 60 Hz signal derived from the AC. power supply voltage, for incrementing the temporal information that is stored in CLOCK 118. The time may be displayed on a display device such as a 7-segment display (not shown in Figure 1) that is coupled to controller 110 and mounted on a front panel of the television receiver. Alternatively, the time may be displayed in a portion of the image displayed on CRT 158 by processing the stored time information in OSD processor 140.

The current time (also referred to herein as "local time") that is maintained in CLOCK 118 is checked and modified as required by controller 110. For example, controller 110 can modify the current time in response to time data input by a user (e.g., via IR remote 125). In addition, current time can be modified in response to EDS information that is extracted from a data component of the video signal by a decoder such as data slicer 145. For example, controller 110 checks the stored current time value when EDS time-of-day data is received and changes stored values to the EDS values subject to certain limitations that are illustrated by the flowchart in Figure 2.

In Figure 2, an EDS data processing control routine executed by controller 110 is entered at step 200 when, for example, an EDS packet is received. At step 210, the value of a variable IGNORE_EDS is tested. If the variable is at logic 1, EDS information on the present channel will be ignored and the routine is exited at step 270. The value of IGNORE_EDS is determined as described below. If IGNORE_EDS is not logic 1, EDS data in the present signal will be processed further.

At step 220, the EDS data is tested for errors or inappropriate data. For example, EDS data in a time-of-day packet might be tested by comparing the EDS data to the current time stored in CLOCK 118 in Figure 1. If the EDS time differs significantly, e.g., more than 2 minutes, from the current time, an error may exist. Also, EDS program schedule information could be tested to determine if the scheduled time in the EDS data is reasonable. For example, temporal information in the schedule information could be compared to current time maintained by the system in CLOCK 118 to determine whether the scheduled time is in the future. If no error is detected, the EDS data is processed further at step 240 followed by the routine being exited at step 270. An example of further processing of EDS data is the updating of the current time stored in CLOCK 118 in response to an EDS time-of-day packet.

If an error is detected at step 220, EDS data recorded on video tape may be the source of the error. At step 230, the user is notified that the EDS data is invalid and is asked to provide an input indicating whether or not to use the EDS data. For example, a message, or notification, may be displayed on the television screen. The user may decide to use the EDS data, despite the appearance of an error, in certain instances. For example, an EDS time-of-day packet may not be from video tape and a true discrepancy may exist between the correct time in the EDS time-of-day and the current time stored in CLOCK 118, e.g. following a power failure. If the user decides to use the EDS data, step 230 is followed by further processing of the EDS data at step 240.

Path "A" shown in phantom in Figure 2 indicates that step 220 is optional. More specifically, the routine in Figure 2 could be modified by eliminating checking EDS data for errors. The user could be given the opportunity to decide whether or not to use the EDS data for each EDS packet. Alternatively, the error check at step 220 could be limited to specific types of EDS data, e.g., only for EDS time-of-day data, and step 220 would be bypassed for other types of packets. Another approach would be to prompt the user at step 230 in regard to specific types of EDS packets only, e.g., time-of-day packets.

If the user decides at step 230 to not use the EDS data, the user is given the option at step 250 to ignore all future EDS data on the present channel, e.g., channel 4 which is dedicated to providing a television signal from a VCR. If the user chooses not to ignore future EDS data, the routine is exited at step 270 and subsequent EDS data may cause further occurrences of the user query at step 230. If the user chooses to ignore future EDS data, the variable IGNORE_EDS in Figure 2 is set to logic 1 and a code representing that value is stored in a register or memory, e.g., RAM 116 or EEPROM 117 in Figure 1. Controller 110 maintains a "map" in memory of values of IGNORE_EDS codes for each channel. The map is updated each time step 260 is executed. Controller 110 accesses the stored map and tests the respective IGNORE_EDS code, i.e. the value corresponding to the current channel, each time step 210 is executed. In this manner, the television receiver automatically "learns" on which channels EDS information is to be ignored. By using the "learned" information, the system need not bother the user with EDS control related messages each time an EDS packet is received.

Once IGNORE_EDS is at logic 1, the user may reset the IGNORE_EDS value for a certain channel to logic 0 to enable the processing of EDS data by activating an EDS control feature. For example, an "EDS enable" entry may be selected in a control menu displayed on the television screen. The menu display is activated, e.g., in response to a particular key being pressed on IR remote 125 in Figure 1.

As discussed above in regard to step 230, step 250 may be modified to permit the user to selectively ignore only certain EDS data in any channel, e.g., time-of-day packets only. Thus, the user could selectively eliminate only potentially erroneous EDS data in a particular channel. A selective approach could be particularly useful in regard to erroneous or inappropriate EDS data that results from a source other than a VCR. For example, EDS information originating in one time zone while a user is in another time zone or programming that is tape delayed at the station.

Another possible modification of the routine shown in Figure 2 would be to eliminate or bypass steps 250 and 260 as shown in phantom by path "B" in Figure 2. If steps 250 and 260 are eliminated, a "NO" result at step 230 results in the routine being exited at step 270. In addition, step 210 and the described stored map of IGNORE_EDS values would be unnecessary. Eliminating the capability to ignore all, or a selected type, of EDS data on a particular channel means that a greater degree of interaction with a user may be required because the message produced at step 230 will be generated each time an erroneous EDS packet is detected. However, increased user interaction eliminates the need for the greater complexity of storing, processing and maintaining the map of IGNORE_EDS values.

Rather than asking a user whether future EDS data should be ignored (step 250 in Figure 2), a default approach to processing EDS data can be established either via a displayed menu or automatically based on the user's response to the message generated at step 230. For a menu approach, a setup menu, that can be activated by a user, includes an "enable/disable EDS processing" option. When "enable EDS" is selected, EDS data is processed and the message generated at step 230 is displayed as needed. If disabled, EDS data is ignored. A default EDS processing procedure may be established automatically based on a user's response to the first occurrence of the message generated at step 230. If the user chooses to use EDS data, all subsequent EDS data is processed and used without asking the user. If the user chooses to not use EDS data, all future EDS data is ignored automatically without asking the user. A default condition established automatically can be changed, e.g., enabling generation of the message produced at step 230, via a displayed menu. As in the case of the IGNORE_EDS feature described above, a default EDS-handling condition can be global, i.e., all channels and all EDS data, or can apply to particular channels and particular types of EDS data.

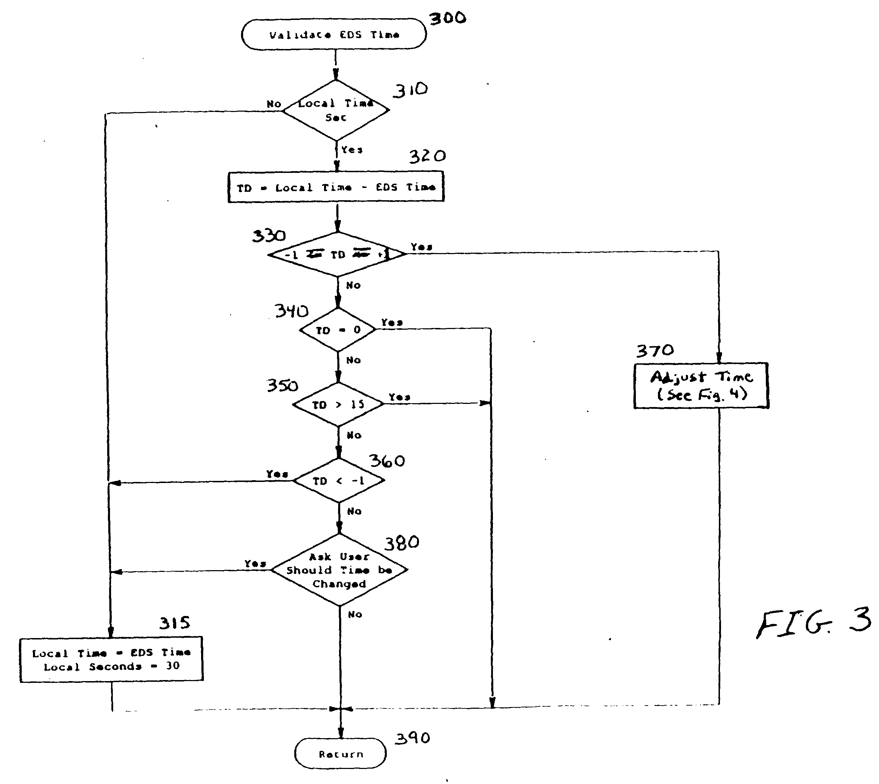

Figure 3 shows, in flowchart form, an exemplary embodiment of a portion of Figure 2 comprising steps 220, 230 and 240. The embodiment in Figure 3 processes a specific type of EDS data, namely time-of-day data. EDS time-of-day data may be used to modify a parameter of the system such as the system's "local time", i.e., time maintained by clock 118 in Figure 1. The routine in Figure 3 begins at step 300 in response to an EDS time-of-day packet being received. Entering the routine in Figure 3 at step 300 corresponds to starting execution of step 220 in Figure 2. Step 300 is followed by step 310 where the time in clock 118 is tested to determine whether clock 118 has been set with a local-time value. For example, step 310 can involve determining whether the system is in the mode of operation that flashes a time value of 12:00 indicating that local time has not been set.

If a local time has not been set, errors in EDS time data relative to local time cannot be determined. Thus, EDS time information, i.e. EDS hours and minutes, is presumed to be valid and is used at step 315 to set the local hours and minutes values maintained by clock 118 in Figure 1. At step 315, the "seconds" portion of the local time-of-day value is set to 30 seconds because EDS time-of-day information does not necessarily define seconds. Time-of-day data provided by EDS does include a "seconds" bit. However, that bit may be, but is not necessarily, set only when EDS time information is sent at the "top" of the minute, i.e., zero seconds. At any other time, the bit is not set and the seconds value is known only to be non-zero. Therefore, the seconds value is set to a predetermined value such as 30 seconds at step 315. The routine in Figure 3 is exited at step 390 following step 315.

If local time is set when step 310 is executed, operation continues at step 320 where a time difference TD between EDS time and local time is calculated. Because EDS time information does not necessarily includes seconds information, value TD represents a time difference in hours and minutes only. More specifically, value TD is determined by subtracting EDS hours and minutes values from local hours and minutes values maintained by clock 118. Step 320 is followed by step 330 where value TD is tested to determine whether value TD is equal to either + 1 minute or - 1 minute. If the result is "YES", EDS time is close to local time, but local time may be incorrect and may require correction. Therefore, operation continues at step 370 where EDS time data is processed further and may be used to correct local time.

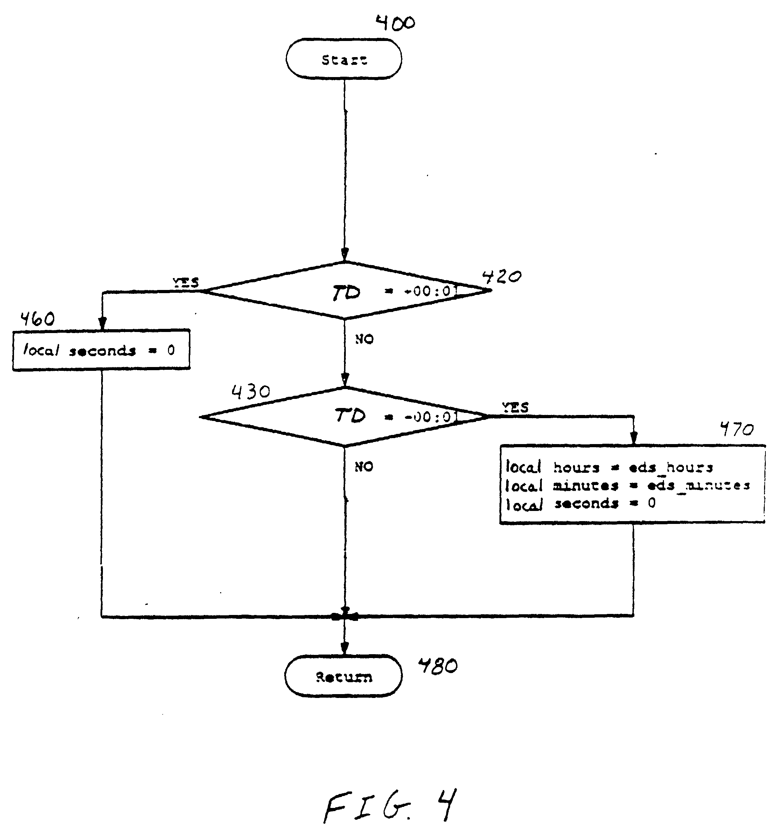

An implementation of step 370 is illustrated in Figure 4. After entering the routine shown in Figure 4 at step 400, time difference value TD (calculated at step 320 in Figure 3) is evaluated beginning at step 420. If value TD is equal to +1 minute, local time exceeds EDS time by time amounts of from 1 second to 1 minute and 59 seconds. In this case, changing the local minutes value to equal the EDS minutes value could increase an existing error. For example, if local time is 12:05:01 and EDS time is 12:04 and the correct seconds value is 59 seconds (12:04:59), the actual time error is 2 seconds and value TD is +1. If local minutes is changed from 5 to the EDS value of 4, the error increases to 58 seconds because local time becomes 12:04:01 while the correct time is the EDS time of 12:04 plus 59 seconds. To avoid increasing the error, the local seconds value is set to a predetermined value of 0 (step 460) for a TD value of +1. Changing only the local seconds value has the effect of changing local time in a direction that decreases the error, e.g., 12:05:01 becomes 12:05:00 reducing the error to 1 second when the correct time is 12:04:59. Following step 460, the routine is exited at step 480.

If the time difference is not equal to +1 minute, another evaluation of time difference TD occurs at step 430 to determine if value TD is equal to -1 minute. If so, local time is less than EDS time by time amounts ranging from -1 second to -1 minute and 59 seconds. In this case, if only the seconds field was changed as was done at step 460, the time error increases rather than decreases. For example, changing a local time of 12:04:59 to 12:04:00 when the correct/EDS time is 12:05:01 increases the error from -2 seconds to -61 seconds. Thus, local hours and minutes are set to EDS hours and minutes and the local seconds value is set to 0 at step 470. This operation decreases the error. For example, changing local time of 12:04:59 to 12:05:00 when correct/EDS time is 12:05:01 decreases the error from -2 seconds to -1 second. If the time difference is not -1 minute at step 430, the routine is exited at step 480. Adjusting local time in response to EDS data as shown in steps 315 and 370 in Figure 3 and in Figure 4 is described in more detail in commonly assigned and co-pending U.S. Patent Application Serial Number 08/362284 filed on December 22, 1994 for Michael D. Landis et al. and incorporated herein by reference.

Returning to Figure 3, a "NO" result at step 330 causes value TD to be tested at step 340 to determine whether value TD is equal to 0. If "YES", local time is correct and need not be changed. Thus, the routine is exited at step 390. If the result at step 340 is "NO", value TD is tested further at step 350 to determine whether the time difference is in a first range defined as a time difference greater than 15 minutes. If "YES", the EDS time value is presumed to come from a recorded source and is ignored by exiting the routine at step 390.

A "NO" result at step 350 causes value TD to be compared to the value -1 at step 360. If value TD is less than -1, i.e., "YES" at step 360, EDS time is ahead of local time by more than 1 minute and is not from a recorded source. Thus, local time is incorrect and local hours and minutes are set to the EDS values at step 315. As described above, local seconds are set to 30 seconds at step 315. Following step 315, the routine is exited at step 390. A "NO" result at step 360 indicates that the time difference is in a second range defined as a time difference greater than 2 minutes but less than 15 minutes.

Although a value of TD between +2 and +15 minutes could indicate that the EDS data is from a recorded source, it is unlikely because the difference is a relatively small value. That is, it is unlikely that a user would playback EDS data within 15 minutes of recording the data. The uncertainty as to the source of the EDS data is resolved at step 380 by providing a notification to a user, e.g., a displayed message (corresponds to step 230 in Figure 2), indicating that the time difference is in the range of +2 to +15 minutes, and asking the user whether or not local time should be corrected. If the user responds affirmatively, CPU 112 in Figure 1 produces a modification of local time in clock 118 at step 315 by setting local time to EDS time followed by the routine being exited at step 390. If the user responds negatively at step 380, the routine is exited directly at step 390. The path from step 380 to step 390 in Figure 3 corresponds to path "B" shown in phantom in Figure 2.

Although the preceding description of the invention is primarily in the context of time-related EDS data, the invention may also be useful in regard to other types of EDS data that may cause modifications of other parameters. For example, EDS data may also include data packets that provide the name of the television network associated with the signal source. A television may automatically receive EDS network name information and "label" (or translate the network name into a "logo") channels without the user's effort. Thus, a user who wishes to watch a particular network but does not know the channel number can select the channel by choosing the network name from a menu. However, a VCR also includes a tuner and may selectively couple any network to a single channel, e.g., channel 4, for coupling the VCR to a television set. Thus, using network name information from recorded EDS data to establish a label for the dedicated VCR channel would result in a continuously changing label. In addition, a user might also want to use non-standard network names, use a "label" instead of a "logo", or use the label "VCR" for the VCR channel rather than using the logo for whatever the VCR was tuning. By "learning" to ignore certain EDS data on certain channels, a user's preferred data, e.g., particular labels or logos, would not be corrupted. In addition, EDS data could be ignored for purposes of modifying a list of network labels, but the television could continue to process EDS network name data to "learn" what network each of the local channels carried.

The invention is also applicable to data that is similar to EDS data, but does not comply with the EIA-608 standard. Specifically, data may be included in horizontal line intervals other than line 21 of field 2, e.g., line 16. In addition, data may be included in more than one line interval per field or frame of video information. For data that occurs in a line interval other than line 21 or in multiple line intervals, the embodiment described can be modified to detect the appropriate line intervals. For example, data slicer 145 in Figure 1 would count horizontal line intervals and extract data from the desired line intervals as the line intervals occur.

The invention is also applicable to digital television signals. As described above, auxiliary data such as EDS information may be included in specific horizontal line intervals of analog television signals, e.g., an NTSC signal. However, digital signals may include data organized in packets of data, i.e., a "packetized" signal, rather than by horizontal line intervals. Each packet provides data pertaining to a particular "stream" of information, e.g., a particular channel, and a particular type of data, e.g., control data, video data, audio data or EDS-type data. Multiple packets may be necessary to provide all information needed to produce a horizontal line of a displayed image. Thus, data such as EDS information is included in one or more packets rather than one or more horizontal line intervals such as in analog television signals. An example of a digital television system using a packetized digital signal is the DSS® (Digital Satellite System) television system manufactured by Thomson Consumer Electronics, Inc., Indianapolis, Indiana. Each data packet included in the DSS® signal includes a "header" portion that identifies the type of information in the packet and includes a "payload" portion that is the packet data. The header indicates, for example,. that the payload includes EDS-type data associated with channel 3.

These and other modifications are intended to be within the scope of the following claims.

## Claims

1. A system for processing a television signal including a video information component and including a data component, said system comprising:
first means (140) for processing said data component to produce first data (EDS Time) representing first temporal information associated with said television signal;
second means (118) for generating second data (Local Time) representing second temporal information associated with said system, and for producing a modification of said second data in response to said first data;
control means (112) for processing said first and second data to determine a time difference between first and second times represented by said first and second temporal information, respectively; wherein if said time difference is in a first range said control means operates in response to a control signal for preventing said modification of said second data, and if said time difference is in a second range exclusive of said first range said control means operates independent of said control signal for preventing said modification of said second data; and
means (120;125) for generating said control signal.

2. The system of claim 1 wherein said time difference (TD) being in one of said first and second ranges indicates said second time is later than said first time.

3. The system of claim 1 or 2 wherein said time difference (TD) being in said second range indicates said second time is later than said first time by an amount greater than if said time difference is in said first range.

4. The system of one of claims 1 - 3 whereín said means for generating said control signal comprises:
output means (158) for providing a notification to a user indicating that said time difference is in said first range; and input means (120;125) responsive to activation by a user during an interval when said notification is being provided to said user for generating said control signal.

5. The system of one of claims 1 - 4 further comprising memory means (117) for storing a code; said control means being responsive to a predetermined value of said stored code for preventing said second means from producing said modification.

6. The system of claim 5 wherein said stored code is set to said predetermined value in response to said activation by said user.

7. The system of claim 5 or 6 further comprising means for tuning (102,104) said television signal from a plurality of television signals; said memory means (117) storing a plurality of codes associated with respective ones of said plurality of television signals; said control means being responsive to a respective one of said stored plurality of codes exhibits said predetermined value.

8. The system of one of claims 1 - 7 wherein said first range of values being values from 2 minutes to 15 minutes; and said second range of values being values greater than 15 minutes.

9. The system of one of claims 1 - 8 wherein said first temporal information comprising a first time of day and; said second temporal information comprising a second time of day maintained by said system.

10. The system of claim 9 wherein said first temporal information further comprising a first date and; said second temporal information further comprising a second date maintained by said system.

## Patentansprüche

1. System zur Verarbeitung eines Fernsehsignals mit einer Video-Informations-Komponente und mit einer Daten-Komponente, umfassend:
erste Mittel (140) zur Verarbeitung der Daten-Komponente, um erste Daten (EDS-Zeit) zu erzeugen, die eine erste zeitliche, dem Fernsehsignal zugeordnete Information darstellen;
zweite Mittel (118) zur Erzeugung zweiter Daten (Ortszeit), die eine zweite zeitliche, dem System zugeordnete Information darstellen, und zur Erzeugung einer Modifizierung der zweiten Daten in Abhängigkeit von den ersten Daten;
Steuermittel (112) zur Verarbeitung der ersten und zweiten Daten, um eine Zeitdifferenz zwischen ersten und zweiten Zeiten zu bestimmen, die durch die erste bzw. die zweite zeitliche Information dargestellt werden; wobei die Steuermittel, wenn die Zeitdifferenz in einem ersten Bereich liegt, in Abhängigkeit von einem Steuersignal arbeiten, um die Modifizierung der zweiten Daten zu verhindern, und die Steuermittel, wenn die Zeitdifferenz in einem zweiten Bereich liegt, der den ersten Bereich ausschließt, unabhängig von dem Steuersignal arbeiten, um die Modifizierung der zweiten Daten zu verhindern; und
Mittel (120; 125) zur Erzeugung des Steuersignals.

2. System nach Anspruch 1, bei dem die in einem von dem ersten und zweiten Bereich liegende Zeitdifferenz (TD) anzeigt, daß die zweite Zeit später als die erste Zeit ist.

3. System nach Anspruch 1 oder 2, bei dem die in dem zweiten Bereich liegende Zeitdifferenz (TD) anzeigt, daß die zweite Zeit um einen Betrag später als die erste Zeit ist, der größer ist, als wenn die Zeitdifferenz in dem ersten Bereich liegt.

4. System nach einem der Ansprüche 1 bis 3, bei dem die Mittel zur Erzeugung des Steuersignals umfassen:
Ausgangsmittel (158) zur Erzeugung einer Mitteilung an einen Benutzer, die anzeigt, daß die Zeitdifferenz in dem ersten Bereich liegt; und
Eingangsmittel (120); 125), die auf die Aktivierung durch einen Benutzer während eines Intervalls ansprechen, wenn die Mitteilung an den Benutzer erzeugt wird, um das Steuersignal zu erzeugen.

5. System nach einem der Ansprüche 1 bis 4, umfassend Speichermittel (117) zur Speicherung eines Codes; wobei die Steuermittel auf einen vorgegebenen Wert des gespeicherten Codes ansprechen, um die zweiten Mittel daran zu hindern, die Modifizierung zu erzeugen.

6. System nach Anspruch 5, bei dem der gespeicherte Code auf den vorgegebenen Wert in Abhängigkeit von der Aktivierung durch den Benutzer eingestellt wird.

7. System nach Anspruch 6 oder 7 umfassend Mittel zur Abstimmung (102, 104) des Fernsehsignals aus einer Vielzahl von Fernsehsignalen; wobei die Speichermittel (117) eine Vielzahl von Codes speichern, die entsprechenden der Vielzahl von Fernsehsignalen zugeordnet sind; wobei die Steuermittel auf einen entsprechenden der Vielzahl von gespeicherten Codes ansprechen, der den vorgegebenen Wert aufweist.

8. System nach einem der Ansprüche 1 bis 7, bei dem der erste Bereich von Werten Werte zwischen 2 und 15 Minuten aufweist und der zweite Bereich von Werten Werte aufweist, die größer als 15 Minuten sind.

9. System nach einem der Ansprüche 1 bis 8, bei dem die erste zeitliche Information eine erste Tageszeit umfaßt und die zweite zeitliche Information eine zweite von dem System gehaltene Tageszeit umfaßt.

10. System nach Anspruch 9, bei dem die erste zeitliche Information ferner ein erstes Datum und die zweite zeitliche Information ein zweites von dem System gehaltenes Datum umfaßt.

## Revendications

1. Un système pour traiter un signal de télévision incluant une composante-information vidéo et une composante de données, ledit système comportant :
des premiers moyens (140) pour traiter ladite composante de données pour produire des premières données (Temps EDS) représentant des premières informations temporelles associées avec ledit signal de télévision,
des seconds moyens (118) pour générer des secondes données (temps local) représentant des secondes informations temporelles associées avec ledit système et pour produire une modification desdites secondes données en réponse auxdites premières données,
des moyens de commande (112) pour traiter lesdites première et seconde données afin de déterminer une différence de temps entre des premier et second temps représentés, respectivement, par lesdites première et seconde informations temporelles, dans lequel, si la différence de temps est dans une première gamme, lesdits moyens de commande fonctionnent en réponse à un signal de commande empêchant la modification desdites secondes données et si la différence de temps est dans une seconde gamme exclusive de la première gamme, lesdits moyens de commande fonctionnent indépendamment dudit signal de commande empêchant ladite modification des secondes données, et
des moyens (120, 125) pour générer ledit signal de commande.

2. Le système de la revendication 1 dans lequel la différence de temps (TD) se trouvant dans l'une desdites première et seconde gammes indique que le second temps est postérieur au premier temps.

3. Le système de la revendication 1 ou 2 dans lequel la différence de temps (TD) se trouvant dans ladite seconde gamme indique que le second temps est postérieur au premier temps d'une quantité plus grande que si la différence de temps est dans la première gamme.

4. Le système selon l'une des revendications 1 - 3 dans lequel ledit moyen pour générer le signal de commande comporte :
des moyens de sortie (150) fournissant à l'utilisateur une notification indiquant que la différence de temps est dans la première gamme, et
des moyens d'entrée (120 ; 125) répondant à une commande de l'utilisateur pendant l'intervalle durant lequel la notification est fournie à l'utilisateur pour générer ledit signal de commande.

5. Le système selon l'une des revendications 1 - 4 comportant de plus une mémoire (117) pour stocker un code, lesdits moyens de commande répondant à une valeur prédéterminée du code stocké pour empêcher les seconds moyens de produire la notification.

6. Le système de la revendication 5 dans lequel le code stocké est mis à une valeur prédéterminée en réponse à la commande de l'utilisateur.

7. Le système de la revendication 5 ou 6 comprenant de plus des moyens pour accorder (102, 104) le signal de télévision provenant d'une pluralité de signaux de télévision, la mémoire (117) stockant une pluralité de codes associés avec le signal respectif de ladite pluralité des signaux de télévision, lesdits moyens de commande répondant à un code respectif parmi la pluralité des codes stockés pour empêcher ledit second moyen de produire une modification si le code respectif parmi la pluralité des codes stockés présente ladite valeur prédéterminée.

8. Le système selon l'une des revendications 1 - 7 dans lequel ladite première gamme de valeur comporte des valeurs de 2 minutes à 15 minutes ; et ladite seconde gamme de valeurs comporte des valeurs plus grandes que 15 minutes.

9. Le système selon l'une des revendications 1 - 8 dans lequel
ladite première information temporelle comporte une première durée d'un jour ; et
ladite seconde information temporelle comporte une seconde durée d'un jour maintenue par ledit système.

10. Le système de la revendication 9 dans lequel
ladite première information temporelle comporte de plus une première date ; et
ladite seconde information temporelle comporte de plus une seconde date maintenue par ledit système.
